(19)

Europäisches
Patentamt
European
Patent Office
Office européen
des brevets

(11) **EP 4 782 796 A2**

(12) **EUROPEAN PATENT APPLICATION**

(43) Date of publication:
**29.07.2026 Bulletin 2026/31**

(21) Application number: **26151707.2**

(22) Date of filing: **14.01.2026**

(51) International Patent Classification (IPC):
***G01G 19/08*** (2006.01)

(52) Cooperative Patent Classification (CPC):
**G01G 19/086**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **24.01.2025 CN 202510114604**

(71) Applicant: **Robert Bosch GmbH
70442 Stuttgart (DE)**

(72) Inventors:
• **LI, Longyuan
Shanghai, 200335 (CN)**
• **LU, Xiaonan
Shanghai, 200335 (CN)**
• **LI, Yuxiao
Shanghai, 200335 (CN)**

(54) **METHOD AND APPARATUS FOR DETERMINING VEHICLE MASS**

(57)    The present application relates to a method for determining the mass of a vehicle, comprising: determining a set of correction parameters based on the mass of the vehicle and/or a first acceleration of the vehicle determined in a previous round; determining a corrected second acceleration based on a second acceleration of the vehicle and the set of correction parameters; and determining the mass of the vehicle based on the corrected second acceleration.

**500**

FIG. 5

EP 4 782 796 A2

## Description

## Technical Field

The present application relates to the field of vehicle control and more particularly to methods and apparatuses for determining vehicle mass.

## Background

Vehicle mass (e.g., including the mass of the vehicle itself and passengers or articles in the vehicle) is a critical parameter affecting the dynamics, braking systems, and overall safety of the vehicle. Thus, during vehicle operation, it may be desirable to determine the mass of the vehicle in real time.

On the one hand, the mass of a vehicle can be measured using a scale or air suspension sensor. This method requires the use of specialized sensors, which may not be available in the environment or vehicle in many cases. On the other hand, during vehicle operation, the vehicle can estimate the vehicle's mass in real time based on the output of onboard sensors. For example, onboard sensors may indicate acceleration values, and the vehicle can estimate its mass based on its acceleration. However, the acceleration values indicated by the vehicle's onboard sensors may be inaccurate. For example, due to the different masses of passengers or articles carried by the vehicle or due to the vehicle accelerating or decelerating, the front or rear of the vehicle may rise or fall to different degrees, causing the direction and magnitude of the acceleration measured by the onboard sensors to deviate from the actual acceleration of the vehicle. In this case, estimating the vehicle mass directly using the acceleration sensed by sensors may also be inaccurate.

Accordingly, an improved system for determining vehicle mass is desired, which can accurately determine the vehicle's mass using the vehicle's existing sensors without requiring additional sensors.

## Summary of the Invention

The following introduction is provided in order to introduce selected concepts in a simple manner, and these concepts will be further described in the detailed description below. The introduction is not intended to highlight the key or necessary features of the claimed subject matter, nor is it intended to limit the scope of the claimed subject matter.

To address the above issues, the present application provides a novel computer-implemented method for determining the mass of a vehicle and, accordingly, a novel framework for determining the mass of a vehicle. By employing the methods of the various examples of this application, it is possible to determine the mass of a vehicle accurately and in real time using sensors already present in the vehicle system. Accurate determination of vehicle mass may assist in the control of the braking and traction of the vehicle, help dynamically adjust power performance to improve energy efficiency or driving range, improve vehicle acceleration and braking comfort, and ensure safe driving of the vehicle without overloading.

According to one aspect of the present application, a method of determining the mass of a vehicle is provided, comprising: determining a set of correction parameters based on the mass of the vehicle and/or a first acceleration of the vehicle determined in a previous round; determining a corrected second acceleration based on a second acceleration of the vehicle and the set of correction parameters; and determining the mass of the vehicle based on the corrected second acceleration.

According to one aspect of the present application, an apparatus for determining the mass of a vehicle is provided, comprising: a correction parameter determination module, which determines a set of correction parameters based on the mass of the vehicle and/or a first acceleration of the vehicle determined in a previous round; a correction module, which determines a corrected second acceleration based on a second acceleration of the vehicle and the set of correction parameters; and a mass determination module, which determines the mass of the vehicle based on the corrected second acceleration.

According to one aspect of the present application, an apparatus for determining the mass of a vehicle is provided, comprising: one or more processors; and one or more memories, the memories having computer-executable instructions stored thereon, and the instructions, when run by the one or more processors, performing operations for determining the mass of a vehicle according to the examples of the present application.

According to one aspect of the present application, a processing apparatus is provided, comprising: one or more processors; and one or more memories, the memories having computer-executable instructions stored thereon, and the instructions, when run by the one or more processors, performing operations for determining the mass of a vehicle according to the examples of the present application.

According to one aspect of the present disclosure, a machine-readable storage medium is provided, executable instructions are stored on the machine-readable storage medium, and the instructions, when executed, cause one or more processors to perform operations for determining the mass of a vehicle according to the examples of the present application.

According to one aspect of the present disclosure, a computer program product is provided, comprising executable instructions, and the instructions, when executed, cause one or more processors to perform operations for determining the mass of a vehicle according to the examples of the present application.

According to various aspects of the present disclosure, the technical solution provided by the present disclosure for determining the mass of a vehicle comprises a correction parameter determination module and a correction module, wherein the correction parameter determination module determines a set of correction parameters based on the vehicle mass and/or a first acceleration of the vehicle determined in a previous round, and the correction module determines a corrected second acceleration based on a second acceleration of the vehicle and the determined set of correction parameters. This technique utilizes existing sensors in the vehicle (e.g., acceleration sensors) to ensure that the second acceleration is corrected to take into account the effects of the vehicle mass and/or the first acceleration of the vehicle, thereby improving the accuracy of the vehicle mass calculated based on the corrected second acceleration. Other advantages of various aspects of the present disclosure will be illustrated below.

**Brief Description of the Drawings**

The nature and advantages of the content of the present application may be further implemented by referring to the following accompanying drawings. In the drawings, similar components or features may have the same reference signs.

 FIG. 1 shows a block diagram of an apparatus for determining the mass of a vehicle according to one example.
 FIGS. 2A-2B show schematic diagrams of obtaining mass correction parameters by fitting a sampled dataset according to the corresponding examples.
 FIG. 3 shows a schematic diagram of obtaining acceleration correction parameters by fitting a sampled dataset according to one example.
 FIG. 4 shows a schematic diagram of an optimization process based on a sampled dataset according to one example.
 FIG. 5 shows a flowchart of a method for determining a mass of a vehicle according to one example.
 FIG. 6 shows a block diagram of an apparatus for determining the mass of a vehicle according to one example.
 FIG. 7 shows a block diagram of a processing apparatus according to one example.

**Detailed Description of the Embodiments**

The subject matter described herein will now be discussed with reference to exemplary embodiments. It should be understood that discussions about these embodiments are provided to aid those skilled in the art in better understanding and thereby implementing the subject matter described herein rather than limiting the scope of protection, applicability, or examples described in the Claims. Changes may be made to the functions and arrangements of the elements discussed without departing from the scope of protection of the content of the present application. Various processes or components may be omitted, substituted, or added in the various examples as needed. For example, the described method may be performed in a different order than that described, and various steps may be added, omitted, or combined. In addition, features described in relation to some examples may also be combined in other examples.

As used herein, the term "comprising" and its variations are open terms, which mean "including but not limited to." The term "based on" indicates "at least partially based on." The terms "one example" and "an example" indicate "at least one example". The term "another example" indicates "at least one other example." The terms "first", "second", etc. may refer to different or same objects. Other definitions, whether explicit or implied, may be included below. Unless explicitly stated in the context, the definition of one term is consistent throughout the description.

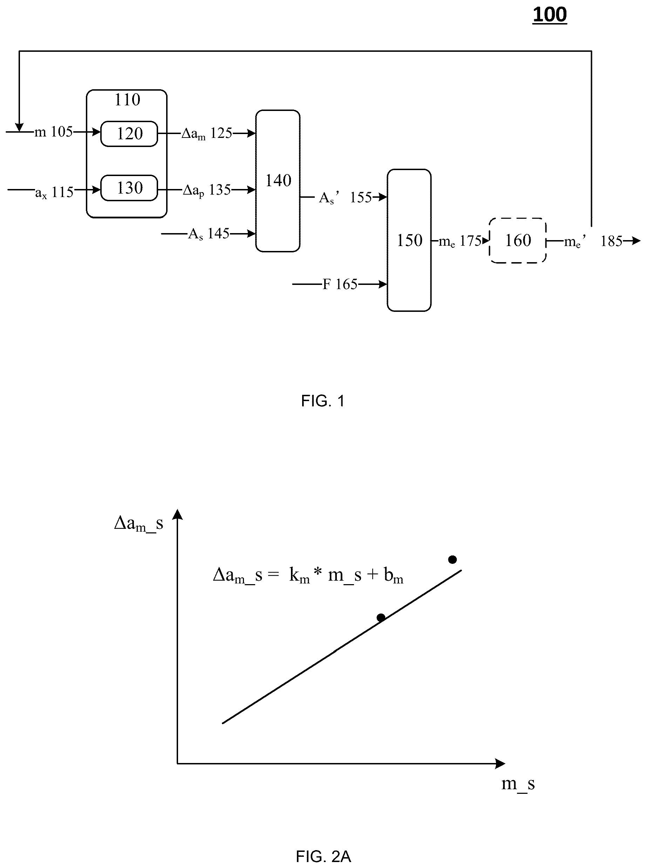

FIG. 1 shows a block diagram of an apparatus 100 for determining the mass of a vehicle according to one example. In the example of FIG. 1, the apparatus 100 comprises a correction parameter determination module 110, a mass correction module 120, an acceleration correction module 130, a correction module 140, a mass determination module 150, and an optional Kalman filter (KF) module 160. It will be appreciated that the apparatus 100 may comprise other modules; FIG. 1 only shows modules relevant to the present example. It will be understood that the apparatus 100 may be implemented in a vehicle, e.g., the apparatus 100 may be implemented in a processing system of the vehicle, e.g., the various modules included in the apparatus 100 may be implemented by software code, by dedicated hardware processing modules, or by a combination of software code and dedicated hardware modules.

Since the acceleration measured by the onboard sensor may be inaccurate due to factors such as the mass of the vehicle and/or vehicle acceleration (e.g., the direction and magnitude of the acceleration measured by the onboard sensor may deviate from the actual acceleration of the vehicle), the correction parameter determination module 110 may determine a set of correction parameters based on the effect of the vehicle's mass $m$ 105 and/or a first acceleration $a_x$ 115 of the vehicle on the acceleration sensed by the vehicle acceleration sensor. For example, the set of correction parameters may indicate a deviation between the acceleration sensed by the vehicle acceleration sensor (e.g., a second acceleration of the vehicle) and the vehicle's actual acceleration caused by the vehicle's mass $m$ 105 and/or the vehicle's first acceleration $a_x$ 115. The second acceleration corrected according to the set of correction parameters may compensate for acceleration deviations caused by vehicle mass or vehicle acceleration. Thus, the mass of the vehicle determined using the corrected second acceleration may be more accurate than the vehicle mass determined directly using the second acceleration.

In examples where the correction parameter determination module 110 comprises a mass correction module 120, the set of correction parameters comprises a first correction parameter $\Delta a_m$ 125. The first correction parameter $\Delta a_m$ 125 may be determined by a mass correction module 120 based on the mass correction parameter set and the vehicle mass to compensate for the effect of the vehicle mass m 105 on the acceleration sensed by the vehicle acceleration sensor. The mass correction parameter set may be a set of parameters with known values, which may be based on empirical presets or obtained by fitting sampled data, e.g., with reference to the following description with respect to FIGS. 2A-2B.

The apparatus 100 may determine the mass of the vehicle in a plurality of rounds, and the mass of the vehicle used by the mass correction module 120 may comprise the mass m 105 of the vehicle determined by the apparatus 100 in a previous round. The mass m 105 of the vehicle may have a preset initial value (e.g., the net weight of the vehicle + 75 kg) for the mass correction module 120 to determine the first correction parameter $\Delta a_m$ 125 in the first round.

The mass m 105 of the vehicle may cause a deviation between the acceleration sensed by the vehicle acceleration sensor and the actual acceleration of the vehicle based on a certain functional relationship. Accordingly, the mass correction module 120 can determine a first correction parameter $\Delta a_m$ 125 based on the vehicle's mass m 105 and the functional relationship. This first correction parameter $\Delta a_m$ 125 can indicate the deviation between the acceleration sensed by the vehicle's acceleration sensor and the vehicle's actual acceleration caused by the vehicle's mass.

For example, the functional relationship may comprise a linear functional relationship. Accordingly, the first correction parameter $\Delta a_m$ 125 may be determined based on a functional relationship such as $\Delta a_m = k_m * m + b_m$, or $\Delta a_m = k_m * (m - m_0) + b_m$, wherein the set of mass correction parameters may comprise parameters $k_m$ and $b_m$. $m_0$ may be a preset value (e.g., $m_0$ may be equal to the vehicle's net weight, or the vehicle's net weight plus the mass of one person, etc.).

In another example, the functional relationship may comprise a non-linear functional relationship. For example, the functional relationship may comprise a quadratic function relationship. Accordingly, the first correction parameter $\Delta a_m$ 125 may be determined based on a quadratic function relationship such as $\Delta a_m = a_m * m^2 + b_m * m + c_m$, or $\Delta a_m = a_m * (m - m_0)^2 + b_m * (m - m_0) + c_m$, wherein the set of mass correction parameters may comprise parameters $a_m$, $b_m$, and $c_m$. $m_0$ may be a preset value (e.g., $m_0$ may be equal to the vehicle's net weight, or the vehicle's net weight plus the mass of one person, etc.).

It will be understood that the functional relationship may further comprise any suitable functional relationship based on the mass m 105 of the vehicle, and the set of mass correction parameters may comprise the set of parameters involved in the functional relationship.

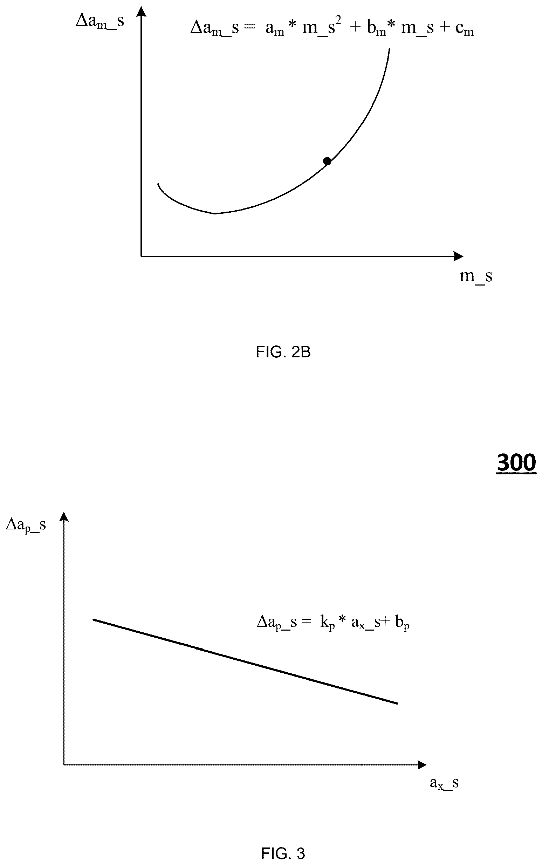

Additionally, or alternatively, in examples where the correction parameter determination module 110 comprises an acceleration correction module 130, the set of correction parameters comprises a second correction parameter $\Delta a_p$ 135. The second correction parameter $\Delta a_p$ 135 may be determined by the acceleration correction module 130 based on the acceleration correction parameter set and the first acceleration $a_x$ 115 of the vehicle to compensate for the effects of the first acceleration $a_x$ 115 of the vehicle on the acceleration sensed by the vehicle acceleration sensor, where the acceleration correction parameter set may be a set of parameters with known values, e.g., based on empirical presets or obtained by fitting sampled data, e.g., as described below with reference to FIG. 3. For example, the second correction parameter $\Delta a_p$ 135 may indicate a deviation between the acceleration sensed by the vehicle acceleration sensor and the actual acceleration of the vehicle caused by the first acceleration of the vehicle.

The first acceleration $a_x$ 115 sensed by a first sensor set of the vehicle can be used as a reference acceleration of the vehicle (e.g., regarded as a reference to the actual acceleration of the vehicle) and to determine the effect of the first acceleration $a_x$ 115 on a second acceleration $A_s$ 145 sensed by a second sensor set (e.g., the second acceleration $A_s$ 145 may be the acceleration used when determining the mass of the vehicle), wherein the second sensor set is different from the first sensor set.

For example, the first sensor set may comprise one or more sensors among the vehicle's wheel speed sensors, inertial measurement unit (IMU) sensor, or accelerometer, and the vehicle's first acceleration $a_x$ 115 may comprise an acceleration determined based on the acceleration sensed by the first sensor set (e.g., used directly or calculated by linear or nonlinear means). For example, the vehicle's first acceleration $a_x$ 115 may be an acceleration sensed by the wheel speed sensors of the vehicle.

The vehicle's first acceleration $a_x$ 115 may cause a deviation between the acceleration sensed by the vehicle acceleration sensor and the actual acceleration of the vehicle based on a certain functional relationship. Accordingly, the acceleration correction module 130 may determine the second correction parameter $\Delta a_p$ 135 based on the vehicle's first acceleration $a_x$ 115 and the functional relationship.

For example, the functional relationship may comprise a linear functional relationship. Accordingly, the second correction parameter $\Delta a_p$ 135 may be determined based on a functional relationship such as $\Delta a_p = k_p * a_x + b_p$, wherein the set of acceleration correction parameters may comprise parameters $k_p$ and $b_p$. In some examples, $b_p$ may be equal to 0.

In another example, the functional relationship may comprise a non-linear functional relationship. For example, the functional relationship may comprise a quadratic function relationship. Accordingly, the second correction parameter $\Delta a_p$ 135 may be determined based on a quadratic function relationship such as $\Delta a_p = a_p * a_x^2 + b_p * a_x + c_p$, wherein the set of mass correction parameters may comprise parameters $a_p$, $b_p$, and $c_p$.

It will be understood that the functional relationship may further comprise any suitable functional relationship based on the vehicle's first acceleration $a_x$, and the set of acceleration correction parameters may comprise the set of parameters involved in the functional relationship.

The set of correction parameters determined by the correction parameter determination module 110 can reflect the deviation caused by the vehicle's mass m 105 and/or the vehicle's first acceleration $a_x$ 115 (e.g., reference acceleration) from the second acceleration $A_s$ 145 sensed by the second sensor set. As noted above, the second acceleration $A_s$ 145 may be the acceleration used in determining the mass of the vehicle and the second sensor set may be different than the first sensor set.

For example, the second sensor set may be different from the first sensor set and comprise one or more sensors among the vehicle's wheel speed sensors, IMU sensor, or accelerometer. The vehicle's second acceleration $A_s$ 145 may comprise an acceleration determined based on the acceleration sensed by the second sensor set (e.g., used directly or calculated by linear or non-linear calculation). For example, the vehicle's second acceleration $A_s$ 145 may comprise the acceleration sensed by the vehicle's IMU sensor, or it may be calculated based on the acceleration sensed by the wheel speed sensors and the acceleration sensed by the IMU sensor (e.g., by subtracting the acceleration sensed by the IMU sensor from the acceleration sensed by the wheel speed sensors).

The correction module 140 may determine a corrected second acceleration $A_s'$ 155 based on the second acceleration $A_s$ 145 and the determined set of correction parameters.

In an example where the set of correction parameters comprises the first correction parameter $\Delta a_m$ 125, the correction module 140 can determine the corrected second acceleration $A_s'$ 155 based on a function transformation of the second acceleration $A_s$ 145 and the first correction parameter $\Delta a_m$ 125. For example, the corrected second acceleration $A_s'$ 155 may be determined based on transformations such as $A_s' = A_s + \Delta a_m$ and $A_s' = A_s * \Delta a_m$. It will be understood that any suitable function transformation may be used to correct the second acceleration $A_s$ 145 based on the first correction parameter $\Delta a_m$ 125.

In an example where the set of correction parameters comprises the second correction parameter $\Delta a_p$ 135, the correction module 140 can determine the corrected second acceleration $A_s'$ 155 based on a function transformation of the second acceleration $A_s$ 145 and the second correction parameter $\Delta a_p$ 135. For example, the corrected second acceleration $A_s'$ 155 may be determined based on transformations such as $A_s' = A_s + \Delta a_p$ and $A_s' = A_s * \Delta a_p$. It will be understood that any suitable function transformation may be used to correct the second acceleration $A_s$ 145 based on the second correction parameter $\Delta a_p$ 135.

In an example where the set of correction parameters comprises the first correction parameter $\Delta a_m$ 125 and second correction parameter $\Delta a_p$ 135, the correction module 140 can determine the corrected second acceleration $A_s'$ 155 based on a function transformation of the second acceleration $A_s$ 145, the first correction parameter $\Delta a_m$ 125, and the second correction parameter $\Delta a_p$ 135. For example, the corrected second acceleration $A_s'$ 155 may be determined based on transformations such as $A_s' = A_s + \Delta a_m + \Delta a_p$ and $A_s' = A_s * \Delta a_m * \Delta a_p$. It will be understood that any suitable function transformation may be used to correct the second acceleration $A_s$ 145 based on the first correction parameter $\Delta a_m$ 125 and the second correction parameter $\Delta a_p$ 135.

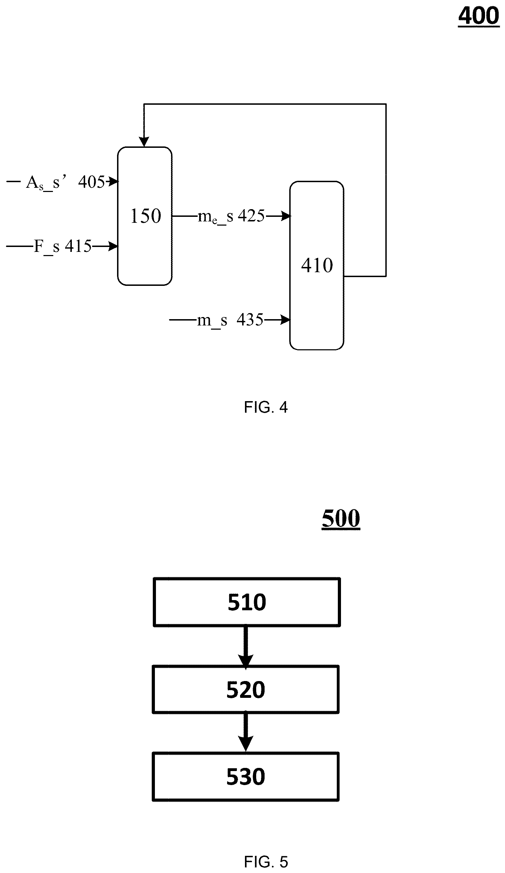

The mass determination module 150 may determine the mass $m_e$ 175 of the vehicle based on the set of force parameters F 165 of the vehicle, the corrected second acceleration $A_s'$ 155, and the set of mass determination parameters, wherein the set of mass determination parameters may be a set of parameters with known values, e.g., based on empirical presets or obtained by fitting or optimizing sampled data, e.g., as described below with reference to FIG. 4. For example, the mass $m_e$ 175 of the vehicle may be determined based on $m_e = \frac{k_1 * F + b_1}{k_2 * A_s' + b_2}$, wherein the set of mass determination parameters comprises parameters $\{k_1, k_2, b_1, b_2\}$.

The set of force parameters F 165 of the vehicle may comprise combinations of various forces acting on the vehicle. For example, the set of force parameters F 165 of the vehicle may comprise at least one of the traction force $F_{prop}$ acting on the vehicle, the rolling resistance $F_{roll}$ acting on the vehicle, the acceleration resistance $F_a$ acting on the vehicle, and the wind resistance $F_{aero}$ acting on the vehicle. For example, the mass $m_e$ 175 of the vehicle may be determined based on $m_e = \frac{k_1 * F_{prop} + k_3 * F_{aero} + k_4 * F_a + b_1}{k_2 * A_s' + b_2}$, wherein the set of mass determination parameters comprises parameters $\{k_1, k_2, k_3, k_4, b_1, b_2\}$.

In some examples, the set of force parameters F 165 of the vehicle may be determined based on signals from vehicle components (e.g., vehicle sensors). For example, the traction force $F_{prop}$ acting on the vehicle may be determined based on the vehicle's traction torque signal and gear ratio (if any). The wind resistance $F_{aero}$ acting on the vehicle can be determined based on the vehicle speed $v_x$ indicated by wheel speed sensors or a GPS module (e.g., $F_{aero}$ may be proportional to $v_x^2$). The acceleration drag $F_a$ acting on the vehicle may be determined based on the vehicle's acceleration (e.g., $F_a$ can be proportional to the vehicle's acceleration), which may be the vehicle's first acceleration $a_x$ 115 sensed by the vehicle's first sensor set (e.g., a reference acceleration sensed by wheel speed sensors) or a value determined based on acceleration sensed by any of the vehicle's sensors.

In an example where the vehicle's first acceleration $a_x$ 115 is the acceleration sensed by the vehicle's wheel speed sensors and the second acceleration $A_s$ 145 is the acceleration sensed by the vehicle's IMU sensor, the vehicle's mass $m_e$ 175 can be determined based on

$$m_e = \frac{k_1 * F_{prop} + k_2 * F_{aero} + k_3 * F_a + b_1}{k_4 * a_x - k_5 * A_s' + b_2}$$, wherein the set of mass determination parameters comprises parameters $\{k_1, k_2, k_3, k_4, k_5, b_1, b_2\}$. Further, in this example, the vehicle's mass $m_e$ 175 may be determined based on

$$m_e = \frac{k_1 * F_{prop} + k_2 * v_x^2 + k_3 * a_x + b_1}{k_4 * a_x - k_5 * A_s' + b_2}$$.

Optionally, the apparatus 100 may comprise a Kalman filter (KF) 160 to post-process a plurality of masses $m_e$ 175 determined in a plurality of rounds to obtain a post-processed mass $m_e'$ 185. For example, the KF 160 may comprise using a moving average filter to process a plurality of determined vehicle masses $m_e$ 175. The post-processed mass $m_e'$ 185 may have less noise and better accuracy than the mass $m_e$ 175.

In addition, besides the apparatus 100, the vehicle may further comprise other modules (e.g., air suspension sensors, etc.) to determine the mass of the vehicle. In this example, an extended Kalman filter (EKF) may be used to post-process the determined vehicle mass $m_e$ 175 (or $m_e'$ 185) with the vehicle mass determined by other modules (e.g., to perform signal fusion). The vehicle mass determined by EKF fusion with other modules may have less noise and better accuracy than the vehicle mass determined by the apparatus 100 alone.

In some examples, the apparatus 100 may periodically perform determinations of vehicle mass for each round. In some examples, the apparatus 100 may further comprise a convergence module that determines whether the apparatus 100 should proceed to the next round of determining the vehicle's mass based on whether the mass $m_e$ 175 of the vehicle determined by the apparatus 100 or the vehicle mass after KF or EKF post-processing has converged. For example, in response to the convergence of the determined vehicle mass, the convergence module may determine that the apparatus 100 will not proceed to the next round of determining the vehicle's mass; in response to the failure of the determined vehicle mass to converge, the convergence module may determine that the apparatus 100 will proceed to the next round of determining the vehicle's mass. For example, the convergence condition could be that the change in the K masses output by the apparatus 100 in K consecutive rounds is less than a threshold. For example, the change in the K masses could be determined by the variance of the K masses or any suitable value representing the change, where K is a predetermined value. It will be understood that any suitable convergence condition may be employed in the examples.

In some examples, the apparatus 100 may initiate a process for determining the mass of the vehicle in response to an activation condition. For example, the activation condition may indicate that the vehicle is in linear constant speed or accelerating motion. For example, the activation condition may be triggered based on any combination of signals among pedal signals, steering wheel angle signals, transmission signals, anti-lock braking system (ABS) or traction control system (TCS) activation signals, and vertical acceleration signals.

In an example where the correction parameter determination module 110 comprises a mass correction module 120, the set of mass correction parameters may be obtained by fitting a first sampled dataset. FIGS. 2A-2B show schematic diagrams of obtaining mass correction parameters by fitting a first sampled dataset according to the corresponding examples.

The first sampled dataset may comprise a plurality of different sampled masses m_s of the vehicle. For example, a plurality of different sampled masses m_s of the vehicle may be obtained by loading a plurality of loads of different masses into the vehicle within the load-bearing range of the vehicle.

The first sampled dataset may further comprise a sampled second acceleration $A_s$_s corresponding to each of the plurality of sampled masses m_s of the vehicle. For example, when the vehicle is stationary (e.g., stationary on flat ground or on a slope with a known inclination), a second sensor set of the vehicle may sense a corresponding sampled second acceleration $A_s$_s for different masses of the vehicle. For example, the second sensor set comprises one or more sensors among the vehicle's wheel speed sensors, IMU sensor, or accelerometer. For example, the value of the second acceleration $A_s$_s may be the difference between the acceleration value obtained by the IMU sensor and the acceleration value obtained by the wheel speed sensors, which represents the slope acceleration. The slope acceleration represents the acceleration due to gravity. In an ideal situation, the slope acceleration equals the inclination of the slope. However, in actual measurement, the error in the detected slope acceleration is affected by the vehicle's mass. In one example, when a vehicle with a sampled mass m_s is stationary on flat ground (with an inclination of zero), the detected second acceleration $A_s$_s may be used to represent the deviation caused by the vehicle's mass m_s.$\Delta a_m$_s When a vehicle with a sampled mass m_s is stationary on a slope with a known inclination P_s, the difference between the detected second acceleration A_s_s and the known inclination P_s may be used to represent a deviation caused by the vehicle's mass m_s.$\Delta a_m$_s It will be understood that the second acceleration A_s_s may be obtained by various appropriate sensors and methods, and the examples of the present application are not limited to a particular detection method for the second acceleration A_s_s.

Since the first sampled dataset is collected based on the actual condition of the vehicle, the set of mass correction parameters determined by fitting the functional relationship between the deviation of the second sampling acceleration A_s_s$\Delta a_m$_s and the corresponding sampled mass m_s in the first sampled dataset can more accurately reflect the vehicle's performance, making the first correction parameter determined by the mass correction module based on the set of mass correction parameters more accurate.

For examples (e.g., $\Delta a_m = k_m * m + b_m$, or $\Delta a_m = k_m * (m - m_0) + b_m$) of deviations between the acceleration sensed by vehicle's acceleration sensor and the actual acceleration of the vehicle caused linearly by the mass of the vehicle, the mass correction parameters may comprise $k_m$ and $b_m$, as described above. Accordingly, $k_m$ and $b_m$ may be obtained by linear fitting $\Delta a_m\_s = k_m * m\_s + b_m$ based on the deviation of the sampled second acceleration A_s-_s$\Delta a_m$_s and the corresponding sampled mass m_s, as shown in FIG. 2A.

For examples (e.g., $\Delta a_m = a_m * m^2 + b_m * m + c_m$ or $\Delta a_m = a_m * (m - m_0)^2 + b_m * (m - m_0) + c_m$) of deviations between the acceleration sensed by vehicle's acceleration sensor and the actual acceleration of the vehicle caused in a quadratic polynomial manner by the mass of the vehicle, the mass correction parameters may comprise $a_m$, $b_m$, and $c_m$, as described above. Accordingly, $a_m$, $b_m$, and $c_m$ may be obtained by a polynomial fit A_s_s = $a_m * m\_s^2 + b_m * m\_s + c_m$ based on the deviation $\Delta a_m$_s of the sampled second acceleration A_s_s and the corresponding sampled mass m_s, as shown in FIG. 2B.

It will be understood that the mass of the vehicle and the deviation between the acceleration sensed by the vehicle's acceleration sensor and the vehicle's actual acceleration can be represented by any suitable functional relationship, and a corresponding fitting method may be applied to the first sampled dataset to determine the set of mass correction parameters involved in the functional relationship.

In an example where the correction parameter determination module 110 comprises an acceleration correction module 130, the set of acceleration correction parameters may be obtained by fitting the second sampled dataset. FIG. 3 shows a schematic diagram of obtaining acceleration correction parameters by fitting a second sampled dataset according to one example.

The second sampled dataset may comprise a plurality of different sampled first accelerations a_x_s of the vehicle. For example, a first sensor set may be used to sense a plurality of sampled first accelerations a_x_s when the vehicle is traveling on flat ground or on a slope with a known inclination at different steady accelerations. The sampled first acceleration a_x_s may be considered a reference for the actual sampled acceleration of the vehicle. The first sensor set may comprise one or more sensors among the vehicle's wheel speed sensors, IMU sensor, or accelerometer, and the vehicle's sampled first acceleration a_x_s may comprise an acceleration determined based on the acceleration sensed by the first sensor set (e.g., used directly or calculated by linear or nonlinear means). In one example, the vehicle's sampled first acceleration a_x_s may be a sampled acceleration sensed by the wheel speed sensors of the vehicle. It will be understood that the first acceleration a_x_s may be obtained by various appropriate sensors and methods, and the examples of the present application are not limited to a particular detection method for the first acceleration a_x_s.

The second sampled data may further comprise sampled second accelerations A_s_s corresponding to each sampled first acceleration a_x_s in a plurality of sampled first acceleration signals of the vehicle. For example, a second sensor set may be used to sense a sampled second acceleration A_s_s corresponding to the sampled first acceleration when the vehicle is traveling on flat ground or on a slope with a known inclination at different steady accelerations. The sampled second acceleration A_s_s may be the acceleration used in determining the vehicle's mass. The second sensor set may be different from the first sensor set and comprise one or more sensors among the vehicle's wheel speed sensors, IMU sensor, or accelerometer. The vehicle's sampled second acceleration A_s_s may comprise an acceleration determined based on the acceleration sensed by the second sensor set (e.g., used directly or calculated by linear or non-linear calculation). In one example, the vehicle's sampled second acceleration A_s_s may be a sampled acceleration sensed by the IMU sensor of the vehicle. In another example, the vehicle's sampled second acceleration A_s_s is calculated based on the acceleration sensed by the wheel speed sensors and the acceleration sensed by the IMU sensor (e.g., by subtracting the acceleration sensed by the IMU sensor from the acceleration sensed by the wheel speed sensors). As noted above, for example, the value of the second acceleration A_s_s may be the difference between the acceleration value obtained by the IMU sensor and the acceleration value obtained by the wheel speed sensors, which represents the slope acceleration. The slope acceleration represents the acceleration due to gravity. In an ideal situation, the slope acceleration may equal the inclination of the slope. However, in actual measurement, the error in the detected slope acceleration is affected by the vehicle's actual acceleration (e.g., radial acceleration). In one example, when a vehicle with a sampled mass m_s moves on a flat road (with an inclination of zero) with a first acceleration $a_x\_s$ (which represents radial acceleration), a detected second acceleration $A_s\_s$ may be used to represent the deviation caused by the effect of the actual acceleration$\Delta a_p\_s$. When a vehicle with a sampled mass $m\_s$ moves on a slope with a known inclination $P\_s$ with a first acceleration $a_x\_s$ (which represents radial acceleration), the difference between a detected second acceleration $A_s\_s$ and the known inclination $P\_s$ may represent the deviation caused by the effect of the actual acceleration$\Delta a_p\_s$. In one example, when a vehicle with a sampled mass $m\_s$ moves on a flat road (with an inclination of zero) with a first acceleration $a_x\_s$ (which represents radial acceleration), the difference between a detected second acceleration $A_s\_s$ and the deviation $\Delta a_m\_s$ caused by the above sampled mass $m\_s$ may be used to represent the deviation caused by the effect of the actual acceleration. When a vehicle with a sampled mass $m\_s$ moves on a slope with a known inclination $P\_s$ with a first acceleration $a_x\_s$ (which represents radial acceleration), the difference between a detected second acceleration $A_s\_s$ and the known inclination $P\_s$ and the deviation $\Delta a_m\_s$ may represent the deviation caused by the effect of the actual acceleration$\Delta a_p\_s$.

In some examples, the second sampled dataset is a filtered sampled dataset. For example, activation conditions may be applied to filter out data in the sampled data that does not meet the activation conditions. For example, the filtered sampled data may comprise data collected when the vehicle is not moving at a linear constant speed or accelerating.

Since the second sampled dataset is data collected for the actual condition of the vehicle, the acceleration correction parameter set determined by fitting the functional relationship between the deviation $\Delta a_p\_s$ of the sampled second acceleration $A_s\_s$ and the corresponding sampled first acceleration $a_x\_s$ in the second sampled dataset can more accurately reflect the vehicle's performance, making the second correction parameter determined by the acceleration correction module based on the acceleration correction parameter set more accurate.

For examples (e.g., $\Delta a_p = k_p * a_x + b_p$) of deviations between the acceleration sensed by vehicle's acceleration sensor and the actual acceleration of the vehicle caused linearly by the first acceleration of the vehicle, the acceleration correction parameters may comprise $k_p$ and $b_p$, as described above. Accordingly, $k_p$ and $b_p$ may be obtained by linear fitting between the deviation of the sampled second acceleration $A_s\_s\Delta a_p\_s$ and the corresponding sampled first acceleration $a_x\_s$ $\Delta a_p\_s = k_p * a_x\_s + b_p$. In an example of $b_p$ equal to 0 in $\Delta a_p = k_p * a_x + b_p$, the value obtained by fitting the second sampled dataset may not be used.$b_p$

It will be understood that the vehicle's first acceleration and the deviation between the acceleration sensed by the vehicle's acceleration sensor and the vehicle's actual acceleration can be represented by any suitable functional relationship, and a corresponding fitting method may be applied to the second sampled dataset to determine the set of acceleration correction parameters involved in the functional relationship.

In some examples, when a set of mass correction parameters and/or a set of acceleration correction parameters is determined, a set of mass determination parameters can be determined, wherein the set of mass determination parameters is obtained through an optimization or fitting process based on a third sampled dataset. FIG. 4 shows a block diagram of an apparatus 400 optimized based on a third sampled dataset according to one example.

In the example of FIG. 4, the apparatus 400 comprises a mass determination module 150 and a loss module 410. It will be understood that the apparatus 400 may comprise other modules, e.g., the apparatus 400 may further comprise a correction parameter determination module 110, a mass correction module 120, an acceleration correction module 130, and a correction module 140. Only example modules relevant to this example are shown in FIG. 4.

The third sampled dataset for determining the set of mass determination parameters may comprise a plurality of different sampled masses $m\_s$ and a plurality of sampled second accelerations $A_s\_s$ of the vehicle. When the correction parameter determination module 110 comprises an acceleration correction module, the third sampled dataset may further comprise a sampled first acceleration $a_x\_s$ corresponding to each sampled second acceleration $A_s\_s$ of a plurality of sampled second accelerations. This data may be sampled in a similar manner as described above, which will not be repeated here.

The third sampled dataset may further comprise a set of sampled force parameters $F\_s$ 415 corresponding to each sampled second acceleration $As\_s$ of a plurality of sampled second accelerations. The set of sampled force parameters $F\_s$ 415 of the vehicle may comprise one or more of the various forces acting on the vehicle during data sampling. The set of sampled force parameters $F\_s$ 415 of the vehicle may be determined based on signals from vehicle components (e.g., vehicle sensors). For example, when the vehicle is subjected to at least one of traction, acceleration drag, and wind resistance during sampling, the sampled wind resistance may be determined by the vehicle's sampled speed, and the sampled acceleration drag may be determined by the vehicle's sampled acceleration, wherein the sampled acceleration may be a sampled first acceleration sensed by a first sensor set of the vehicle or an acceleration determined based on the sampled acceleration sensed by any of the vehicle's sensors. In this example, the set of sampled force parameters of the vehicle may comprise at least one of the vehicle's sampled traction force, the vehicle's sampled speed, and the vehicle's sampled first acceleration.

In some examples, the third sampled dataset is a filtered sampled dataset. For example, activation conditions may be applied to filter out data in the sampled data that does not meet the activation conditions. For example, the filtered sampled data may comprise data collected when the vehicle is not moving at a linear constant speed or accelerating.

Since the third sampled dataset is data collected based on the actual condition of the vehicle, the set of mass determination parameters determined by fitting or optimizing based on the third sampled dataset can more accurately reflect the vehicle's performance, making the vehicle mass determined by the mass determination module based on the set of mass determination parameters more accurate.

The optimization process based on the third sampled dataset may be carried out in a plurality of batches. For each batch of optimization, the mass of the vehicle may be estimated in a plurality of rounds (e.g., N rounds, where N is the number of times the second acceleration is sampled at least partially in the third sampled dataset) based on all of the data in the third sampled dataset. For example, when estimating the mass of the vehicle in each round, the sampled mass of the vehicle can be estimated based on a set from the third sampled data (sampled second acceleration, sampled first acceleration (if any), set of sampled force parameters).

In an example where the correction parameter determination module 110 comprises a mass correction module 120, the sampled correction parameter set may comprise the sampled first correction parameter $\Delta a_m\_s$ for each round to estimate the mass of the vehicle. The sampled first correction parameter $\Delta a_m\_s$ may be determined by the mass correction module 120 based on the determined set of mass correction parameters and the vehicle mass $m_e\_s$ estimated during the previous round of optimization, wherein the sampled first correction parameter $\Delta a_m\_s$ may indicate the deviation between the acceleration sensed by the vehicle's acceleration sensor and the actual acceleration of the vehicle caused by the sampled mass of the vehicle in the sampled data. The sampled first correction parameter $\Delta a_m\_s$ may be determined based on a similar process as described in the present application with respect to the mass correction module 120.

Additionally or alternatively, in an example where the correction parameter determination module 110 comprises an acceleration correction module 130, the sampled correction parameter set may comprise the sampled second correction parameter $\Delta a_m\_s$ for each round to estimate the mass of the vehicle. The sampled second correction parameter $\Delta a_p\_s$ may be determined by the acceleration correction module 130 based on the determined set of acceleration correction parameters and the vehicle's sampled first acceleration $a_x\_s$, wherein the sampled second correction parameter $\Delta a_p\_s$ may indicate a deviation between the acceleration sensed by the vehicle's acceleration sensor and the actual acceleration of the vehicle caused by the vehicle's sampled first acceleration $a_x\_s$ in the sampled data. The sampled second correction parameter $\Delta a_p\_s$ may be determined based on a similar process as described in the present application with respect to the acceleration correction module 130.

For each round of vehicle mass estimation, the corrected sampled second acceleration $A_s\_s'$ 405 may be determined based on the sampled second acceleration $A_s\_s$ in the third sampled dataset and the determined set of sampled correction parameters. For example, the corrected sampled second acceleration $A_s\_s$ 405 may be determined based on a similar process as described in the present application with respect to the correction module 140.

For each round of vehicle mass estimation, the sampled mass $m_e\_s$ 425 of the vehicle may be estimated based on the vehicle's set of sampled force parameters $F\_s$ 415, the corrected sampled second acceleration $A_s\_s$ 405, and the set of mass determination parameters. For example, in this optimization process, which is conducted in a plurality of rounds, the parameters in the set of mass determination parameters may be initialized. In the optimization process of the same batch, the set of mass determination parameters used for each round may be the same. For example, in the optimization process of the first batch, the parameters in the set of mass determination parameters may be initialized to specific values, random values, etc. For the optimization process of the Mth batch (M>1), the set of mass determination parameters may have updated values based on the optimization process of the previous batch, as described in detail below. The vehicle's sampled mass $m_e\_s$ 425 may be estimated based on a similar process as described in the present application with respect to the mass determination module 150.

Based on the vehicle's sampled mass estimated in a plurality of rounds during the optimization process of each batch, the mass determination module 150 may output a plurality of estimated sampled masses of the vehicle. For each batch of the optimization process, the loss module 410 may determine the loss based on the sampled mass $m\_s$ 435 of the vehicle in the third sampled dataset and a plurality sampled masses $m_e\_s$ 425 of the vehicle estimated in the plurality of rounds in that batch. For example, the loss module 410 may calculate the loss based on the mean squared error (MSE) function. For example, in an example where the mass determination module 150 estimates the sampled mass $m_e\_s$ 425 of the vehicle for each round based on the formula

$$m_e\_S = \frac{k_1 * F_{prop} + k_2 * v_x^2 + k_3 * a_x + b_1}{k_4 * a_x - k_5 * A_s' + b_2}$$, the set of mass determination parameters comprises parameters $\{k_1, k_2, k_3, k_4, k_5, b_1, b_2\}$. The loss module 410 may determine the loss based on the loss function

$$L(S) = \frac{1}{n}\sum_{i=1}^{n}(m\_s - m_e\_s)^2$$, where n is the number of sampled second accelerations in the third sampled dataset.

The goal of the loss module 410 is to find values for each parameter $\{k_1, k_2, k_3, k_4, k_5, b_1, b_2\}$ in the set of mass determination parameters such that the value of the loss function $L(S)$ is minimized. For example, in the optimization process of the Mth batch (M>1), the loss module 410 may determine the values of each parameter in the set of mass determination parameters by using the downhill simplex method. In this example, the loss module 410 may determine a gradient for each parameter $\{k_1, k_2, k_3, k_4, k_5, b_1, b_2\}$ in the set of mass determination parameters based on the loss $L(S)$ and update the values for each parameter in the set of mass determination parameters based on the gradient descent of each parameter. The updated set of mass determination parameters may be used by the mass determination module 150 during each round to estimate the sampled mass of the vehicle during the optimization of the next batch.

It will be understood that the third sampled dataset may also be optimized by other optimization algorithms or loss functions to obtain a set of mass determination parameters. It will be understood that the set of mass determination parameters may also be obtained by fitting the third sampled data (e.g., non-linear fitting, linear fitting, etc.).

FIG. 5 shows a flowchart of a method 500 for determining a mass of a vehicle according to one example.

At step 510, a set of correction parameters is determined based on the vehicle's mass and/or the vehicle's first acceleration determined in the previous round.

At step 520, a corrected second acceleration is determined based on the vehicle's second acceleration and the set of correction parameters.

At step 530, the mass of the vehicle is determined based on the corrected second acceleration.

According to one example, the set of correction parameters comprises: a first correction parameter determined based on a set of mass correction parameters and the mass of the vehicle determined in the previous round, and/or a second correction parameter determined based on a set of acceleration correction parameters and the first acceleration of the vehicle. According to one example, the set of mass correction parameters and the set of acceleration correction parameters are obtained by fitting a sampled dataset. According to one example, the sampled dataset comprises a first sampled dataset set, the first sampled dataset comprising: a plurality of sampled masses of the vehicle, and a sampled second acceleration of the vehicle corresponding to each of the plurality of sampled masses; and wherein the set of mass correction parameters is obtained by fitting the relationship between the sampled masses of the vehicle and the sampling first error corresponding to the sampled second acceleration of the vehicle. For example, the sampling first error based on the vehicle's sampled second acceleration may be the sampled second acceleration itself. For another example, the sampling first error based on the vehicle's sampled second acceleration may be a value calculated based on the sampled second acceleration, such as the value obtained by subtracting the inclination of the slope from the sampled second acceleration as exemplified above. According to one example, the sampled dataset comprises a second sampled dataset set, the second sampled dataset comprising: a plurality of sampled first accelerations of the vehicle, and a sampled second acceleration of the vehicle corresponding to each of the plurality of sampled first acceleration signals; and wherein the set of acceleration correction parameters is obtained by fitting the relationship between the sampled first accelerations of the vehicle and the sampling second error corresponding to the sampled second acceleration of the vehicle. For example, the sampling second error based on the vehicle's sampled second acceleration may be the sampled second acceleration itself. For another example, the sampling second error based on the vehicle's sampled second acceleration may be a value calculated based on the sampled second acceleration, such as the value obtained by subtracting the sampling first error corresponding to the same sampled mass from the sampled second acceleration mentioned above, the value obtained by subtracting the inclination of the slope from the sampled second acceleration, or the value obtained by subtracting the sampling first error and the inclination of the slope corresponding to the same sampled mass from the sampled second acceleration.

According to one example, at step 530, the vehicle's mass is determined based on the set of force parameters of the vehicle, the corrected second acceleration, and the set of mass determination parameters.

According to one example, the set of force parameters of the vehicle comprises at least one of the vehicle's traction force, the vehicle's speed, and the vehicle's first acceleration. According to one example, the set of mass determination parameters is obtained by an optimization process based on a third sampled dataset, the third sampled dataset comprising: a sampled mass of the vehicle; a plurality of sampled second accelerations of the vehicle; and a set of sampled force parameters corresponding to each of the plurality of sampled second accelerations of the vehicle. According to one example, the third sampled dataset further comprises: a sampled first acceleration corresponding to each of a plurality of sampled second accelerations of the vehicle. According to one example, the set of sampled force parameters of the vehicle comprises at least one of the vehicle's sampled traction force, the vehicle's sampled speed, and the vehicle's sampled first acceleration.

According to one example, the optimization process based on the third sampled dataset is performed in a plurality of batches, the optimization process of each batch comprising a plurality of rounds of estimating the sampled mass of the vehicle, wherein, in one round of estimating the sampled mass of the vehicle, the following operations are performed: determining a set of sampled correction parameters based on the vehicle's estimated mass and/or the vehicle's sampled first acceleration from the previous round; determining a corrected sampled second acceleration based on the vehicle's sampled second acceleration and the set of sampled correction parameters; estimating the vehicle's sampled mass based on the corrected sampled second acceleration, a set of sampled force parameters, and a set of mass determination parameters; and wherein, in the optimization process of each batch, the following operations are performed: determining a loss based on one or more of a plurality of estimated sampled masses of the vehicle estimated in a plurality of rounds in that batch and the sampled mass of the vehicle; and updating the set of mass determination parameters based on the loss.

According to one example, the method 500 further comprises: post-processing of a plurality of masses of the vehicle determined through a plurality of rounds using a KF; and/or post-processing of the determined vehicle masses and the vehicle masses determined by other methods using an EKF.

According to one example, the first acceleration of the vehicle is obtained from the vehicle's wheel speed sensors, and the second acceleration of the vehicle is determined based on the acceleration from the vehicle's IMU sensor and the acceleration from the vehicle's wheel speed sensors.

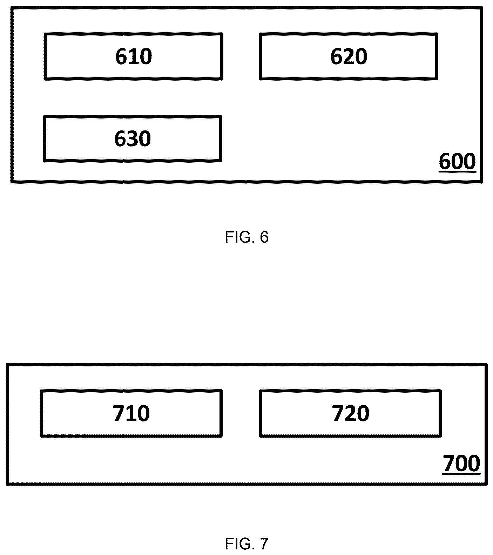

FIG. 6 shows a block diagram of an apparatus 600 for determining the mass of a vehicle according to one example.

The apparatus 600 comprises: a correction parameter determination module 610, a correction module 620, and a mass determination module 630. The correction parameter determination module 610 determines a set of correction parameters based on the vehicle's mass and/or the vehicle's first acceleration determined in the previous round. The correction module 620 determines a corrected second acceleration based on the vehicle's second acceleration and the set of correction parameters. The mass determination module 630 determines the mass of the vehicle based on the corrected second acceleration.

According to one example, the set of correction parameters comprises: a first correction parameter determined by the mass correction module based on a set of mass correction parameters and the mass of the vehicle determined in the previous round, and/or a second correction parameter determined by the acceleration correction module based on a set of acceleration correction parameters and the first acceleration of the vehicle.

According to one example, the set of mass correction parameters and the set of acceleration correction parameters are obtained by fitting a sampled dataset. According to one example, the sampled dataset comprises a first sampled dataset set, the first sampled dataset comprising: a plurality of sampled masses of the vehicle, and a sampled second acceleration of the vehicle corresponding to each of the plurality of sampled masses; and wherein the set of mass correction parameters is obtained by fitting the relationship between the sampled masses of the vehicle and the sampling first error corresponding to the sampled second acceleration of the vehicle. According to one example, the sampled dataset comprises a second sampled dataset set, the second sampled dataset comprising: a plurality of sampled first accelerations of the vehicle, and a sampled second acceleration of the vehicle corresponding to each of the plurality of sampled first acceleration signals; and wherein the set of acceleration correction parameters is obtained by fitting the relationship between the sampled first accelerations of the vehicle and the sampling second error corresponding to the sampled second acceleration of the vehicle.

According to one example, the mass determination module 630 determines the vehicle's mass based on the set of force parameters of the vehicle, the corrected second acceleration, and the set of mass determination parameters.

According to one example, the set of force parameters of the vehicle comprises at least one of the vehicle's traction force, the vehicle's speed, and the vehicle's first acceleration. According to one example, the set of mass determination parameters is obtained by an optimization process based on a third sampled dataset, the third sampled dataset comprising: a sampled mass of the vehicle; a plurality of sampled second accelerations of the vehicle; and a set of sampled force parameters corresponding to each of the plurality of sampled second accelerations of the vehicle. According to one example, the third sampled dataset further comprises: a sampled first acceleration corresponding to each of a plurality of sampled second accelerations of the vehicle. According to one example, the set of sampled force parameters of the vehicle comprises at least one of the vehicle's sampled traction force, the vehicle's sampled speed, and the vehicle's sampled first acceleration.

According to one example, the optimization process based on the third sampled dataset is performed in a plurality of batches, the optimization process of each batch comprising a plurality of rounds of estimating the sampled mass of the vehicle, wherein, in one round of estimating the sampled mass of the vehicle: the correction parameter determination module 610 determines a set of sampled correction parameters based on the vehicle's estimated mass and/or the vehicle's sampled first acceleration from the previous round; the correction module 620 determines a corrected sampled second acceleration based on the vehicle's sampled second acceleration and the set of sampled correction parameters; the mass determination module 630 estimates the vehicle's sampled mass based on the corrected sampled second acceleration, a set of sampled force parameters, and a set of mass determination parameters; and wherein, in the optimization process of each batch: the loss module determines a loss based on one or more of a plurality of estimated sampled masses of the vehicle estimated in a plurality of rounds in that batch and the sampled mass of the vehicle; and updates the set of mass determination parameters based on the loss.

According to one example, the apparatus 600 further comprises: a KF module, which performs post-processing of a plurality of masses of the vehicle determined through a plurality of rounds; and/or an EKF module, which performs post-processing of the determined vehicle masses and the vehicle masses determined by other modules.

According to one example, the first acceleration of the vehicle is obtained from the vehicle's wheel speed sensors, and the second acceleration of the vehicle is determined based on the acceleration from the vehicle's IMU sensor and the acceleration from the vehicle's wheel speed sensors.

FIG. 7 shows a block diagram of a processing apparatus 700 according to one example.

The processing apparatus or processing system 700 comprises one or more control units or processing units 710 that execute one or more machine-readable instructions stored or encoded in a machine-readable storage medium (i.e., the memory 720). In one example, the processing unit 710, when executing the program instructions, is configured to perform various operations and functions described above in connection with FIG. 1 to FIG. 6.

Although not shown in FIGS. 1, 4, and 6 to 7, those skilled in the art may appreciate that the apparatus 100, 400, 600, or 700 may further comprise various other components, for example, various communication modules, bus modules, and possible user interface modules, and the like.

According to one example, a program product, such as a non-transitory machine-readable medium, is provided. The non-transitory machine-readable medium may have instructions that, when executed by the processing unit 710, are capable of performing various operations and functions described above in connection with FIG. 1 to FIG. 6 in various examples of the present application.

According to one example, a computer program product is provided. The computer program product comprises computer-executable instructions that, when executed by the processing unit 710, are capable of performing various operations and functions described above in connection with FIGS. 1 to 6 in various examples of the present application.

Exemplary examples are described above with reference to the specific examples described in the accompanying drawings, but do not represent all examples that may be implemented or fall within the scope of protection of the Claims. Throughout the present Specification, the term "exemplary" means "serving as an example, instance, or illustration" and does not imply "preferred" or "advantageous" over other examples. Specific examples comprise specific details to facilitate understanding of the described technology. However, these technologies may be implemented without these specific details. In some instances, to avoid causing difficulties in understanding the concepts of the described examples, known structures and apparatuses are shown in block diagram form.

The aforementioned description of the present application is provided to allow any person of ordinary skill in the art to implement or use the present application. Various modifications to the present application will be apparent to those of ordinary skill in the art, and the general principles defined herein may be applied to other variations without departing from the scope of protection of the present application. Therefore, the present application is not limited to the exemplary examples and designs described herein but is consistent with the broadest scope defined by the principles and novel features disclosed herein.

**Claims**

1. A method for determining the mass of a vehicle, the method comprising:

   determining a set of correction parameters based on the vehicle's mass and/or the vehicle's first acceleration determined in the previous round;
   determining a corrected second acceleration based on a second acceleration of the vehicle and the set of correction parameters; and determining the mass of the vehicle based on the corrected second acceleration.

2. The method according to Claim 1, wherein the set of correction parameters comprises: a first correction parameter determined based on a set of mass correction parameters and the mass of the vehicle determined in the previous round, and/or a second correction parameter determined based on a set of acceleration correction parameters and the first acceleration of the vehicle.

3. The method according to Claim 2, wherein the set of mass correction parameters and the set of acceleration correction parameters are obtained by fitting a sampled dataset.

4. The method according to Claim 3, wherein the sampled dataset comprises a first sampled dataset, the first sampled dataset comprising: a plurality of sampled masses of the vehicle, and a sampled second acceleration of the vehicle corresponding to each of the plurality of sampled masses; and wherein the set of mass correction parameters is obtained by fitting the relationship between the sampled masses of the vehicle and a sampling first error corresponding to the sampled second acceleration of the vehicle.

5. The method according to Claim 3, wherein the sampled dataset comprises a second sampled dataset, the second sampled dataset comprising: a plurality of sampled first accelerations of the vehicle, and a sampled second acceleration of the vehicle corresponding to

> each of the plurality of sampled first acceleration signals; and
> wherein the set of acceleration correction parameters is obtained by fitting the relationship between the sampled first accelerations of the vehicle and a sampling second error corresponding to the sampled second acceleration of the vehicle.

6. The method according to Claim 1, wherein determining the mass of the vehicle based on the corrected second acceleration further comprises:
determining the mass of the vehicle based on the set of force parameters of the vehicle, the corrected second acceleration, and the set of mass determination parameters.

7. The method according to Claim 6, wherein the set of force parameters of the vehicle comprises at least one of the traction force of the vehicle, the speed of the vehicle, and the first acceleration of the vehicle.

8. The method according to Claim 7, wherein the set of mass determination parameters is obtained by an optimization process based on a third sampled dataset, the third sampled dataset comprising:

> the sampled mass of the vehicle;
> a plurality of sampled second accelerations of the vehicle; and
> the set of sampled force parameters corresponding to each of a plurality of sampled second accelerations of the vehicle.

9. The method according to Claim 8, wherein the third sampled dataset further comprises: a sampled first acceleration corresponding to each of a plurality of sampled second accelerations of the vehicle.

10. The method according to Claim 8, wherein the set of sampled force parameters of the vehicle comprises at least one of the sampled traction force of the vehicle, the sampled speed of the vehicle, and the sampled first acceleration of the vehicle.

11. The method according to any one of Claims 8 to 10, wherein the optimization process based on the third sampled dataset is performed in a plurality of batches, the optimization process of each batch comprising a plurality of rounds of estimating the sampled mass of the vehicle, wherein, in one round of estimating the sampled mass of the vehicle, the following operations are performed:

> determining a set of sampled correction parameters based on the vehicle's estimated mass and/or the vehicle's sampled first acceleration from the previous round;
> determining a corrected sampled second acceleration based on the vehicle's sampled second acceleration and the set of sampled correction parameters;
> estimating the vehicle's sampled mass based on the corrected sampled second acceleration, a set of sampled force parameters, and a set of mass determination parameters; and wherein, in the optimization process of each batch, the following operations are performed:

> > determining a loss based on one or more of a plurality of estimated sampled masses of the vehicle estimated in a plurality of rounds in that batch and the sampled mass of the vehicle; and
> > updating the set of mass determination parameters based on the loss.

12. The method according to Claim 1, further comprising:

> post-processing of a plurality of masses of the vehicle determined through a plurality of rounds using a Kalman filter (KF); and/or
> post-processing of the determined vehicle masses and the vehicle masses determined by other methods using an extended Kalman filter (EKF).

13. The method according to Claim 1, wherein the first acceleration of the vehicle is obtained from the vehicle's wheel speed sensors, and the second acceleration of the vehicle is determined based on the acceleration from the vehicle's Inertial Measurement Unit (IMU) sensor and the acceleration from the vehicle's wheel speed sensors.

14. An apparatus for determining the mass of a vehicle, comprising:

> a correction parameter determination module, which determines a set of correction parameters based on the vehicle's mass and/or the vehicle's first acceleration determined in the previous round;
> a correction module, which determines a corrected second acceleration based on the vehicle's second acceleration and the set of correction parameters; and

a mass determination module, which determines the mass of the vehicle based on the corrected second acceleration.

15. An apparatus for determining the mass of a vehicle, comprising:

one or more processors; and
one or more memories, the memories having computer-executable instructions stored thereon, and the instructions, when run by the one or more processors, perform the operations of any one of Claims 1 to 13.

16. A machine-readable storage medium having executable instructions stored thereon, the instructions, when executed, causing one or more processors to perform the method according to any one of Claims 1 to 13.

17. A computer program product comprising executable instructions that, when executed, cause one or more processors to perform the method according to any one of Claims 1 to 13.

<u>**100**</u>

m 105 →

110
120 → Δa_m 125 →

a_x 115 → 130 → Δa_p 135 →

140 → A_s' 155 →

A_s 145 →

150 ─ m_e 175 → 160 ─ m_e' 185 →

F 165 →

FIG. 1

$$\Delta a_{m\_s} = k_m * m\_s + b_m$$

$\Delta a_{m\_s}$

$m\_s$

FIG. 2A

$$\Delta a_m\_s = a_m * m\_s^2 + b_m * m\_s + c_m$$

FIG. 2B

**300**

$$\Delta a_p\_s = k_p * a_x\_s + b_p$$

FIG. 3

**400**

$-A_{s\_s}'$ 405 →

150

$m_{e\_s}$ 425 →

410

$-F\_s$ 415 →

$-m\_s$ 435 →

FIG. 4

**500**

510

↓

520

↓

530

FIG. 5

```
┌─────────────────────────────────────────────────────────────┐
│   ┌─────────────────────┐      ┌─────────────────────┐       │
│   │        610          │      │        620          │       │
│   └─────────────────────┘      └─────────────────────┘       │
│                                                              │
│   ┌─────────────────────┐                                    │
│   │        630          │                                    │
│   └─────────────────────┘                            600     │
└─────────────────────────────────────────────────────────────┘
```

FIG. 6

```
┌─────────────────────────────────────────────────────────────┐
│   ┌─────────────────────┐   ┌─────────────────────┐          │
│   │        710          │   │        720          │          │
│   └─────────────────────┘   └─────────────────────┘          │
│                                                      700      │
└─────────────────────────────────────────────────────────────┘
```

FIG. 7